# EUROPEAN PATENT APPLICATION

(11) **EP 3 707 996 A1**
(43) Date of publication of application: **16.09.2020**
(21) Application number: 19163323.9
(22) Date of filing: 15.03.2019
(51) Int. Cl.: A01K 1/00, A01K 1/01

(54) **STABLE COMPRISING A VENTILATION SYSTEM AND A WASTE REMOVAL SYSTEM**

(71) Applicant: G. van Beek & Zn. Kalverstalinrichting B.V., 3771 MK Barneveld (NL)
(72) Inventor: van Beek, Geurt Gerardus, 3771 MK Barneveld (NL)
(74) Representative: van Essen, Peter Augustinus

(57) **Abstract**

The invention provides stable comprising:
- a walk-on floor provided with passages for waste, comprising manure and urine;
- a collecting floor below the walk-on floor with a top surface for receiving said waste, and
- a waste removal system,
said waste removal system comprising a discharge channel, with the collecting floor connecting to the discharge channel, wherein said collecting floor and said discharge channel are liquid-closed and said waste removal system further comprises a waste drainage conduit in fluid coupling with said discharge channel, and wherein said waste drainage conduit comprises a waste transport device, in particular said waste transport system comprising a waste suction device for providing a reduced pressure in said waste drainage conduit.

## Description

### Field of the invention

The invention relates to animal husbandry and housing for animals. In particular, the invention relates to a stable, particularly a livestock stable for instance for calves, but also other livestock such as cattle and pigs.

### Background of the invention

A stable, particularly including a manure cellar below the walk-on floor of a livestock stable is generally known. Usually grids are provided over such manure cellars so that manure and urine can freely drain into the manure cellar. Such a grid is for instance known from NL2004490 and NL2004491.

It is known that in such a manure cellar a mixture of faeces and urine results in the development of ammonia. It particularly turned out that a contact time of 2 hours already results in considerable ammonia development.

EP2494864A1 of applicant relates to a stable comprising a manure storage, a walk-on floor provided with passages for manure and urine, and below the walk-on floor a bottom floor comprising a series of concrete floor parts and with a top surface at a fall, and a concrete discharge channel having side walls and a discharge channel bottom at a fall, wherein the series of floor parts with an edge connect to side walls of the discharge channel so that on either side of the discharge channel floor parts at a fall slope down to the discharge channel, wherein the fall of the discharge channel is transverse to the fall of the floor parts, wherein the discharge channel ends in a reservoir for a thin fraction of the manure that has been separated from the manure storage, wherein at a longitudinal side, transverse to the discharge channel, the bottom floor provides a passage for the solid fraction of the manure and its collection in the manure storage, and wherein the stable is furthermore provided with a manure scraper for shoving the manure over the floor parts towards the passage and into the manure storage.

NL2014138 discloses according to its abstract a stable having a manure cellar and a floor having passages for manure and urine. The manure cellar comprises drainage passages for removing air from the cellar. Pressure sensors are provided in the manure cellar and coupled to a control unit for activating a ventilator for keeping a pressure in the cellar higher or equal to a pressure determined by a further pressure sensor above the floor.

WO201005838 according to its abstract discloses: "A ventilation duct system (1,24,34) and method serve for minimizing air pollution in and/or around an animal habitat structure (25,33,52) with at least one animal habitat surface (3). The ventilation duct system (1,24,34) is located at least partly below the at least one animal habitat surface (3) and comprises waste receiving means (2) configured for receiving waste (17,20,32) from and/or through at least a part of the at last one animal habitat surface (3). The ventilation duct system (1,24,34) provides an air pressure gradient across the width of the waste receiving means (2), which air pressure gradient is generated by a pressure difference between a first long side (10) and an opposing second long side (11) of the waste receiving means (2). The ammonia concentration is almost completely kept at floor level and in the slurry pits, and the breathing air in the room above the slatted floor is thus ventilated without admixing the unpleasant gases from the animals."

### Summary of the invention

A disadvantage of prior art is that amongst others that it allows waste to contact air during a relatively long time, that it allows animals to contact the waste gasses, and it provides room for pests like rats and mice.

Hence, it is an aspect of the invention to provide an alternative stable, which preferably further at least partly obviates one or more of above-described drawbacks.

The current invention thus stable comprising:
- a walk-on floor provided with passages for waste, comprising manure and urine;
- a collecting floor below the walk-on floor with a top surface for receiving said waste, and
- a waste removal system,
said waste removal system comprising a discharge channel, with the collecting floor connecting to the discharge channel, wherein said collecting floor and said discharge channel are liquid-closed and said waste removal system further comprises a waste drainage conduit in fluid coupling with said discharge channel, and wherein said waste drainage conduit comprises a waste transport device, in particular said waste transport system comprising a waste suction device for providing a reduced pressure in said waste drainage conduit.

The current invention thus further provides a stable comprising:
- a walk-on floor comprising passages for waste;
- a collecting floor below the walk-on floor for receiving said waste and comprising a series of floor parts, and
- a ventilation system,
wherein said ventilation system comprises a reduced pressure system coupled to a series of inlet openings positioned between said walk-on floor and said collecting floor and along said collecting floor for in operation causing a flow of air over said collecting floor to said inlet openings.

In an embodiment, the stable comprises both the waste removal system and the ventilation system.

In the current context, "reduced pressure" relates to a pressure that is below the current pressure in or about the stable or animal housing. Such a reduced pressure is to be sufficient for causing a flow of air towards said source or sources of reduced pressure. The flow of air is to cause a removal of undesired gasses but avoid draught to such an extent that is detrimental or unpleasant for the animals. Reduced pressure is sometimes also (although in pure physics sense incorrectly) referred to as vacuum. It should be clear that in the current description, it is in fact functional for taking away undesired compounds, usually in the form of gasses. These undesired compounds may also comprise particles and dust.

In an embodiment, the waste removal system provides a largely closed circuit for waste, preventing emission of harmful compounds.

In the current context, the collecting floor and the discharge channel are as smooth as possible and are fluid-closed. The collecting floor and discharge channel can be made from liquid-prove concrete that is made smooth during production, or which is provided with a top layer or coating. Alternative, the collecting floor comprises or consists of a polymer material. Such a floor can be solid or may comprise ribs or reinforcement material, of even comprise a foam core.

The current ventilation system and waste removal system are designed to be easy to build. Furthermore, they can be used to modify existing stables and animal housings, for instance renovate and modernize these in order to meet new requirements on emission and animal well-being.

In the current description and claims, reference is made to waste. In the current animal husbandry context, waste includes manure and urine. This is also referred to as dung. This usually forms a slurry. In the current text, these words may be used alternatingly, but in general refer to the same. If required, the waste may be diluted with water in order to more easily remove the waste. In the current system, water for diluting the slurry to make it more easy for pumping or sucking it away can be provided from recycled water that is recovered from the waste at a later stage, for instance before or after a waste fermentation system.

The current ventilation system and waste removal system prevent negative and unwanted environmental effects of animal husbandry, in particular in cattle/cow and calve stables and for instance pig and goat stables.

In the current description, reference is made to a stable. In a more general sense, the current description relates to animal husbandry, in particular of livestock. The current ventilation system and current waste removal system can be incorporated into a livestock house.

In known stables and livestock houses, due to animal waste the concentration of waste gasses can be high, in particular so high that it becomes detrimental to animal and human health. Furthermore, air becomes polluted with dust and micro dust and even smaller particles. Therefore, the stable is provided with one or more sensors for measuring at least one selected from waste gases and particles. More in particular, one or more sensors are provided for detecting a level of at least one selected from waste gasses and particles. Waste gasses can comprise at least one selected from ammonia (NH₃), carbon dioxide (CO₂), hydrogen sulphide (H₂S), methane (CH₄), hydrogencyanide (HCN), ozone, and a combination thereof. Alternatively or in combination, a sensor can be provided to determine a level of desired gasses, like oxygen.

In an embodiment, the ventilation system can be functionally coupled with, or provided with, an air-treatment device. Examples of air-treatment devices are a biofilter, an air washer, an electrostatic particle filter.

Embodiments of a walk-on floor that allows waste to pass is a slatted floor. A suitable slatted floor and animal-friendly embodiments thereof are for instance described in NL2004490 and NL2004491 of current applicant and which are cited in this description as if fully set forth.

In an embodiment, the waste removal system further comprising a waste scraper for displacing the waste from the collecting floor into the discharge channel. In an embodiment, the waste scraper is furthermore provided for displacing the waste into and through the discharge channel and into the waste drainage conduit. In an embodiment, said waste scraper comprises a scraper lip adapted to a cross section of said discharge channel for displacing waste in said discharge channel.

In an embodiment, collecting floor is at a slope and comprising a series of floor parts, and said collecting floor connecting to the discharge channel with on either side of said discharge channel with said floor parts sloping down to said discharge channel at said slope. In particular for the waste removal system, this facilitates removal of the waste.

In an embodiment, the collecting floor comprises floor parts on either side of said discharge channel and connecting to said discharge channel.

In an embodiment, the waste drainage conduit is provided below said collecting floor.

In an embodiment, the waste drainage conduit is provided between said walk-on floor and said collecting floor.

In an embodiment, the waste removal system further comprising a flush device for flushing waste through said discharge channel and into said waste drainage conduit. In an embodiment, the said flush device comprising a waste flush conduit extending along a length of the collecting floor. In an embodiment, the waste flush conduit comprises a series of spray nozzles directed towards the collecting floor and positioned along the waste flush conduit.

In an embodiment, the waste drainage conduit is parallel to said discharge channel. In an embodiment, the waste drainage conduit is parallel and below said discharge channel. In an embodiment, the waste drainage conduit comprises at least one passage fluid coupling said waste drainage conduit and said discharge channel.

In an embodiment, the inlet openings of the ventilation system are positioned above said collecting floor. In an embodiment, the inlet openings are between 10 and 30 cm above said collecting floor.

In an embodiment, the ventilation system comprises a ventilation conduit between said walk-on floor and said collecting floor and extending along a side of said collecting floor, said ventilation conduit comprising said inlet openings.

In an embodiment, the ventilation system further comprising a space below said collecting floor, said space fluidly coupled to said inlet openings, and said space fluidly coupled to said reduced pressure system for in operation reducing a pressure in said space.

In an embodiment, the stable with said waste removal system and said ventilation system further comprises a profile section comprising attachment ends for attaching said profile section to a wall and defining an attachment plane, said profile section comprising a collecting floor edge receiving part for receiving a collecting floor edge and holding said collecting floor fixed to said wall with its edge at a distance from said attachment plane, said profile section providing a first and second attachment end with said collecting floor edge receiving part between said first and second attachment end, said collecting floor edge receiving part providing a liquid-closed coupling, and said profile section comprising a series of said inlet openings providing air passages cross with respect to a longitudinal direction of said profile section and passing between said collecting floor edge and said attachment plane.

In an embodiment, the stable further comprising a control system that is functionally coupled to at least one selected from said ventilation system and said waste removal system.

In an embodiment, the stable further comprises a series of sensors at animal level, in particular at a height of between 0,5 and 3 meter, for sensing at a concentration level of least one selected from carbondioxide, methane, hydrogensulfide, hydrogencyanide (HCN), ozone and a combination thereof, said sensors functionally coupled with said control system, and said control system adapted for activating or changing operation of at least one selected from said ventilation system and said waste removal system depending on said sensed concentration level.

The invention further relates to a stable comprising:
- a walk-on floor provided with passages for waste, comprising manure and urine;
- a collecting floor below the walk-on floor with a top surface for receiving said waste,
wherein said collecting floor is liquid-closed and said stable further comprises a waste drainage conduit and wherein said waste drainage conduit comprises a waste suction device for providing a reduced pressure in said waste drainage conduit.

In particular, the waste drainage conduit extends along a length of said collecting floor or in operation is extendable along said collecting floor. The waste drainage conduit comprises one of more suction openings positioned or positionable for sucking waste from said collecting floor.

The terms "upstream" and "downstream" relate to an arrangement of items or features relative to the propagation of the air from high pressure region to a low pressure region. In this relation, "upstream" is relates to going from a low pressure region to a high pressure region, opposite the flow of air.

The term "substantially" herein, such as in "substantially all emission" or in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'.

The term "functionally" will be understood by, and be clear to, a person skilled in the art. The term "substantially" as well as "functionally" may also include embodiments with "entirely", "completely", "all", etc. Hence, in embodiments the adjective functionally may also be removed. When used, for instance in "functionally parallel", a skilled person will understand that the adjective "functionally" includes the term substantially as explained above. Functionally in particular is to be understood to include a configuration of features that allows these features to function as if the adjective "functionally" was not present. The term "functionally" is intended to cover variations in the feature to which it refers, and which variations are such that in the functional use of the feature, possibly in combination with other features it relates to in the invention, that combination of features is able to operate or function. For instance, if an antenna is functionally coupled or functionally connected to a communication device, received electromagnetic signals that are receives by the antenna can be used by the communication device. The word "functionally" as for instance used in "functionally parallel" is used to cover exactly parallel, but also the embodiments that are covered by the word "substantially" explained above. For instance, "functionally parallel" relates to embodiments that in operation function as if the parts are for instance parallel. This covers embodiments for which it is clear to a skilled person that it operates within its intended field of use as if it were parallel.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices or apparatus herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device or apparatus claims enumerating several means, several of these means may be embodied by one and the same item of hardware. The mere fact that certain measures are recited in mutually different dependent claims does not indicate that a combination of these measures cannot be used to advantage.

The invention further applies to an apparatus or device comprising one or more of the characterising features described in the description and/or shown in the attached drawings. The invention further pertains to a method or process comprising one or more of the characterising features described in the description and/or shown in the attached drawings.

The various aspects discussed in this patent can be combined in order to provide additional advantages. Furthermore, some of the features can form the basis for one or more divisional applications.

### Brief description of the drawings

Embodiments of the invention will now be described, by way of example only, with reference to the accompanying schematic drawings in which corresponding reference symbols indicate corresponding parts, and in which:
Figure 1 schematically depicts a part of a stable floor, showing a slatted floor that is partly removed, and having the bottom floor partly removed;
Figure 2 a top view of figure 1;
Figure 3 a cross section as indicated in figure 2;
Figure 4 a detail of the waste drainage conduit and its fluid coupling to a discharge channel;
Figure 5 a detail of the discharge channel with an opening in its bottom for fluid coupling to a waste drainage conduit;
Figure 6 a detail of a collecting floor coupling profile with ventilation inlet opening;
Figure 7 a stable with an additional or alternative waste removal system.

The drawings are not necessarily on scale

### Description of preferred embodiments

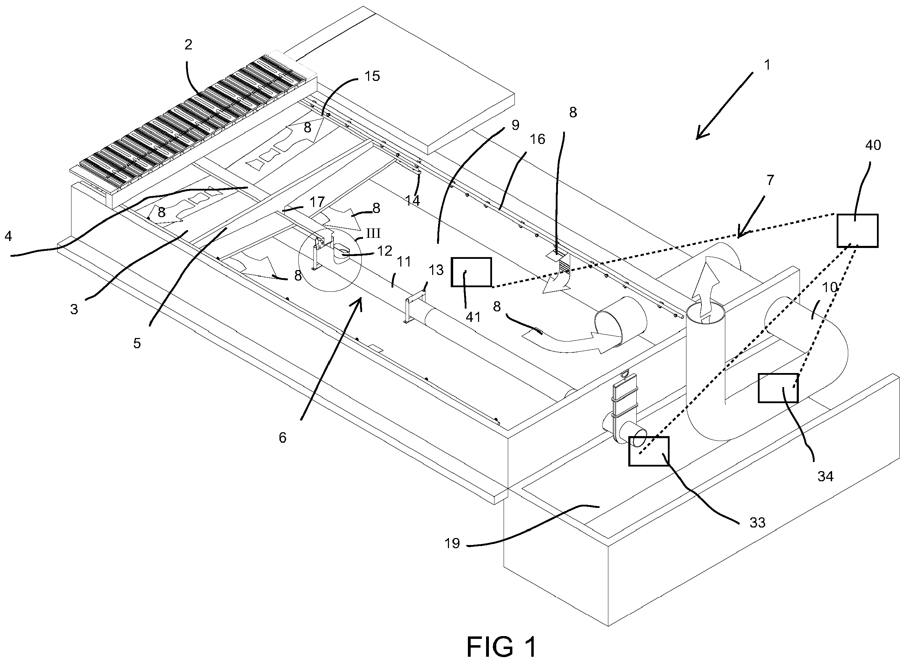

Figure 1 schematically depicts a 3D view of part of a stable 1. In particular, in figure 1 part of a stable floor is depicted, where most part of a walk-on floor 2 is removed. Figure 1 shows the current ventilation system 7 and the current waste-removal system 6. These two systems each provide advantages, and when implemented together these two systems reduce emission and prevent pests in the stable 1. The depicted embodiment has collecting floor 3 below the walk-on floor 2. This collecting floor 3 is liquid closed. In an embodiment with the ventilation system, the collecting floor 3 is furthermore substantially air closed. The collecting floor 3 in the depicted embodiment furthermore comprise a discharge channel 4, in particular an open gutter.

The collecting floor 3 is provided for receiving waste that falls through the walk-on floor 2. The walk-on floor 2 has openings for allowing waste to fall onto the collecting floor 3. In the depicted embodiment, it is a slatted floor, that is largely removed for showing the further construction.

The depicted embodiment is further provided with a waste scraper 5, also called a dung slider®. Waste that drops onto the collecting floor 3 is removed quickly by the waste scraper 5 into a further closed system in order to prevent emission. In the depicted embodiment, the collecting floor 3 is at a slope, sloping towards a discharge channel 4. The waste scraper 5 in use moves back and forth over the collecting floor. In this way, the waste is displaced. In the depicted embodiment, the waste is displaced to and into the displacement channel 4. The displacement to the discharge channel is a first concentrating step.

In an embodiment, the upper surface of the collecting floor 3 is relatively smooth in order to facilitate displacement of the waste. Furthermore, the collecting floor 3 is liquid-closed. In an embodiment, coupling of the collecting floor 3 to the further stable construction is liquid-closed in order to prevent waste from polluting the stable.

The waste scraper 5 has a lower edge contacting the collecting floor 3 in order to ensure, in operation, that the waste is properly displaced and removed from the collecting floor 3.

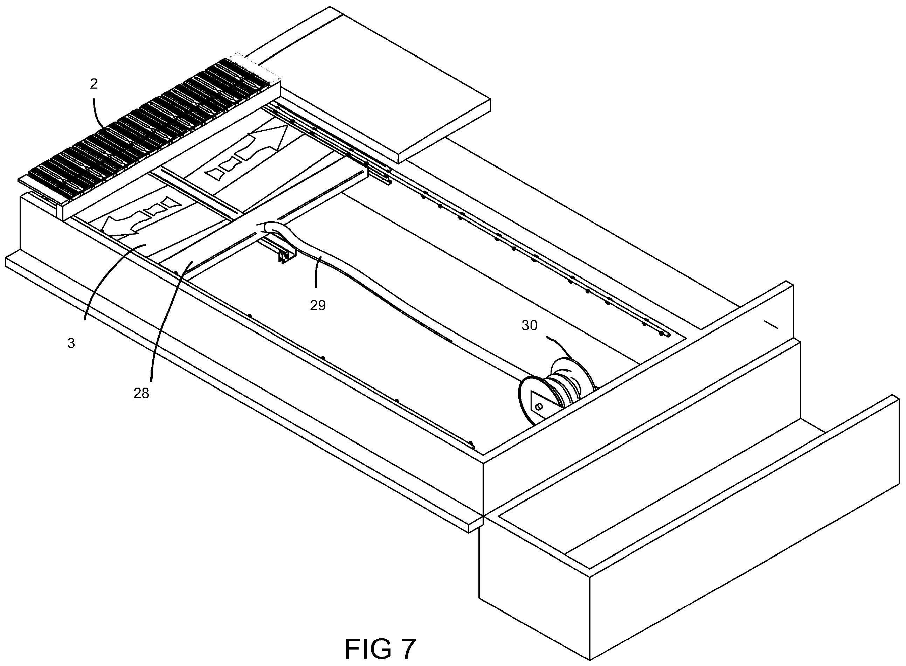

The waste in the waste removal system 6 is introduced in a closed waste drainage conduit 11. In figure 1, the waste drainage conduit 11 is provided below the collecting floor 3. The waste drainage conduit 11 can also be provided below the walk-on floor and above the collecting floor. In figure 7, an alternative embodiment is depicted, where a waste drainage conduit 25 is positioned between the walk-on floor 2 and the collecting floor 3. That embodiment will be discussed further below.

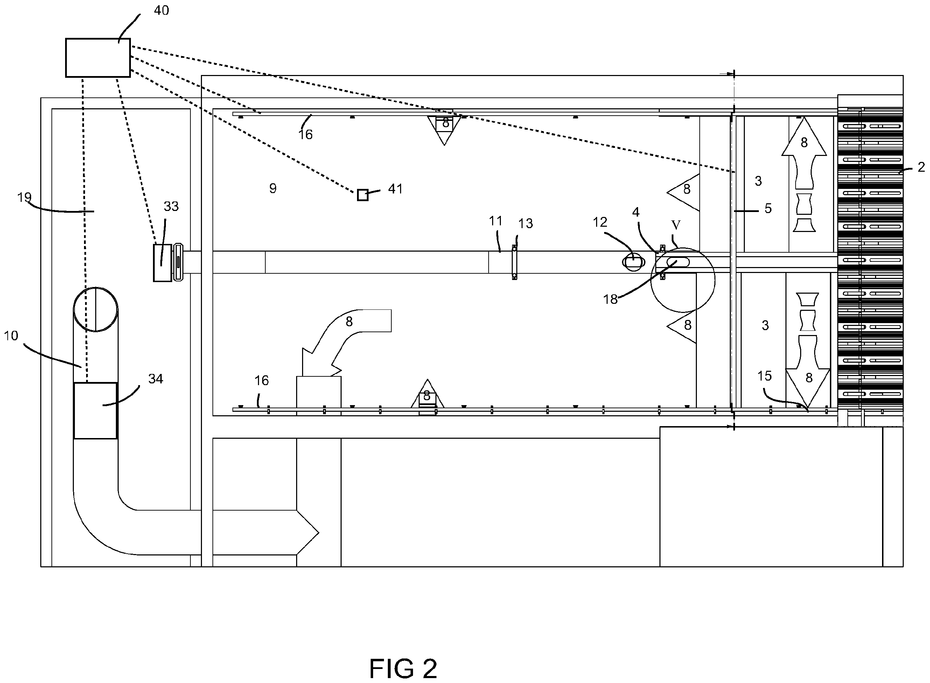

The waste removal system 6 further comprises a waste transport device .., schematically indicated in figure 2. Such a waste transport device may comprise a mechanical transport device like a worm screw. In the current embodiment, the waste transport device comprises a suction device for applying a reduced pressure inside the waste drainage conduit 11. An advantage of such a reduced pressure suction device is that emission is also removed.

In the embodiment of figures 1-3, The waste scraper 5 is provided for displacing the waste to and into the discharge channel 4. In order to facilitate displacement of the waste, the waste removal system can be provided with a waste flush device that sprays liquid, largely water, onto the collecting floor 3. With the collecting floor 3 at a slope and sloping towards a (central) discharge channel 4, a relatively small amount of water is needed. Furthermore, in the current embodiment a waste flush conduit 16 is provided that extends along the collecting floor 3. The waste flush conduit is in the current embodiment provided with a series of spray nozzles along the length of the collecting floor 3. In an embodiment, in order to save water, each time a nozzle that is just in front of the waste scraper 5 is activated. The water used can be recycled water from a waste treatment system that is coupled to the waste removal system 6. An example of a waste treatment system is a biodigester, for instance producing natural gas from waste.

In known stables, a space below the collecting floor is used as a waste cellar. In the current application, the waste is removes via the collecting floor by means of a waste scraper to the discharge channel and from the discharge channel via the waste drainage conduit out of the stable via a closed conduit.

The stable further comprises a ventilation system comprising a reduced pressure system coupled to a series of inlet openings positioned along and above the collecting floor. The flow of air is indicated with reference number 8. The inlet openings cause a flow of air over the collecting floor. In this way, emission from the waste on the collecting floor is directly guided away from the stable and from the animals.

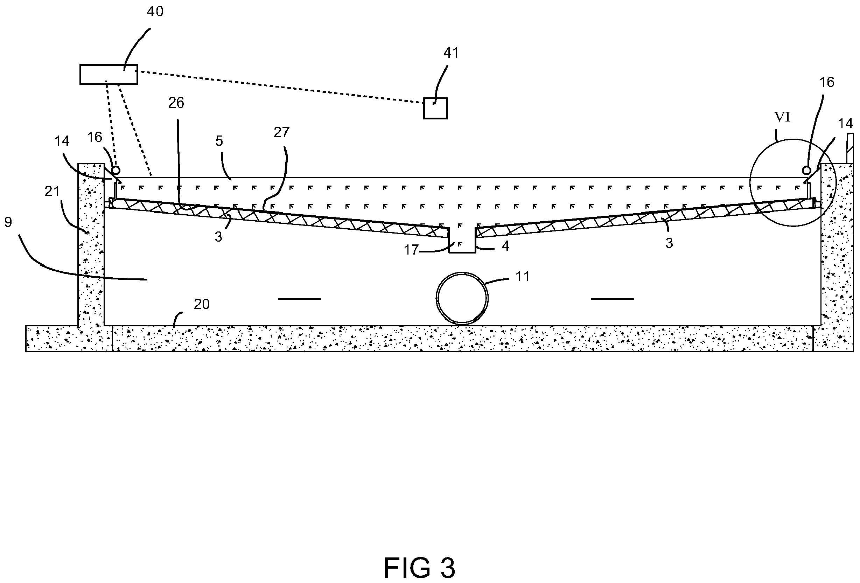

In the embodiment of figures 1-3, A space or cellar 9 is provided below the collecting floor 3. This space 9 had a bottom 20 and side walls 21. In figure 3 is depicted how the waste drainage conduit 11 is provided below the collecting floor 3. The side walls 21 are here provided with attachment profiles 14 extending along the length of the space 9 for holding the collecting floor 3 and providing inlet openings and thus forming part of the ventilation system in this embodiment.

In the current embodiment, as depicted in figures 1 and 2, the space or cellar 9 below the collecting floor 3 is in fluid communication with the space above the collecting floor via inlet openings. Furthermore, air conduit 10 fluidly couples the space or cellar 9 below the collecting floor 3 and a reduced pressure system for creating a reduced pressure in the space or cellar 9 below the collecting floor 3. Such a set-up provides a drought in the space or cellar 9 which can prevent pests like mice and rats from housing. In an alternative embodiment, air conduits are provided along a length of the collecting floor 3 that are provided with inlet openings and the air conduits are coupled with the reduced pressure system. In such an embodiment, a space 9 below the collecting floor 3 is not required. Again, the inlet openings are provided between the walk-on floor 2 and the collecting floor 3 in order to allow removal of emission from waste on the collecting floor 3 before removal of that waste via the waste removal system.

In the current waste removal system for figures 1-3, universal frames 13 are provided for holding the discharge channel 4 and for holding the waste drainage conduit 11. This universal frame 13 can be placed on a floor, like the floor 20 of the space 9.

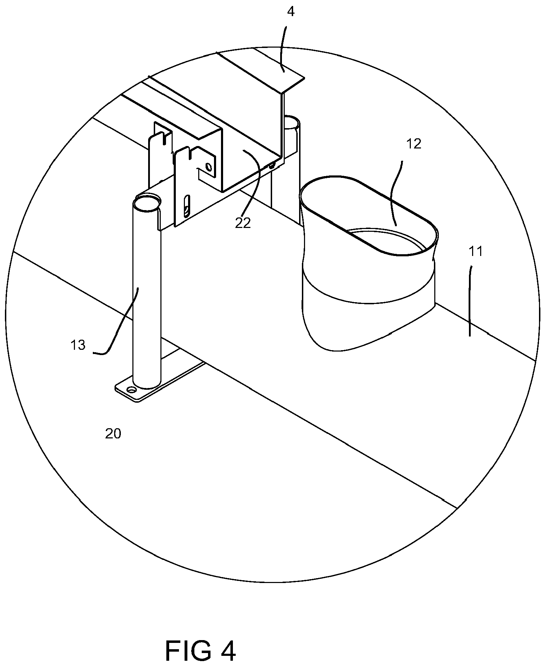

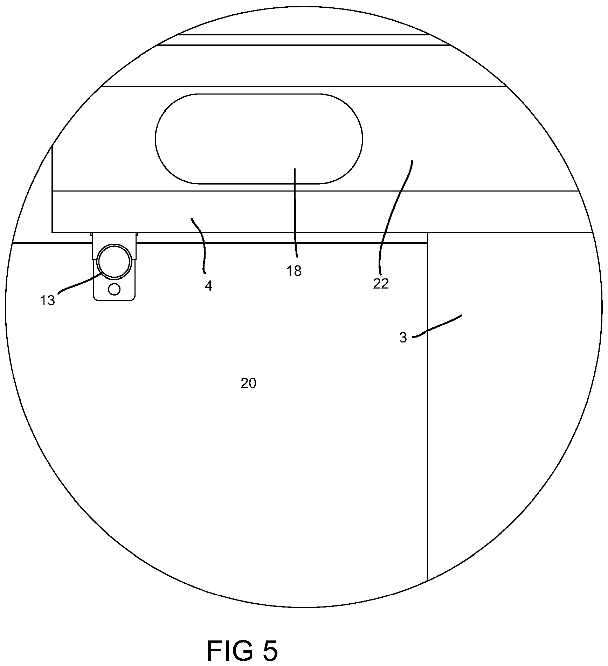

Figures 4 and 5 show an embodiment of a fluid coupling between the discharge channel 4 and the waste drainage conduit 11. In this embodiment, the waste drainage channel 11 comprises one or more fluid couplings 12. These couplings can be provided with a biased valve (not depicted). When the coupled waste suction system reduces the pressure in the waste drainage conduit 11, this opens the biased valve and sucks waste into the waste drainage conduit. To this end, the bottom 22 of the discharge channel 4 is provided with an opening 18 connecting to the fluid coupling 12. In operation, the waste scraper brings waste that is on the collecting floor 3 into the discharge channel 4. When progressing in the direction of the discharge channel 4, the waste scraper 5 advanced the waste. When the waste scraper approaches one of the openings 18, a control system can activate the waste suction system to bring the waste in the waste drainage conduit and transport the waste in the waste drainage conduit. As mentioned before, other transportation devices are possible, like mechanic transportation devices in the waste drainage conduit. An example is a worm transport screw.

In order to displace the waste in the discharge channel, the waste scraper 5 can be provided with a lip 17 that matches the cross section of the discharge channel 4. The edges of such a lip 17 can comprise flexible, rubbery strips to function like a wiper. Lip 17 can be at a forward angle with respect to a normal direction of the discharge channel bottom 22 to assist in inserting waste in the fluid coupling 12. Furthermore, water added by the waste flush conduit can further assist in removal of waste. Once the waste in in the waste drainage conduit, it effectively is hermetically and fluidly sealed from the interior of the stable. In figures 1 and 2, the waste drainage conduit 12 schematically debouches in a space 19. In practise, however, the waste will be transported to a coupled biodigester for producing natural gas.

In figure 3, it is depicted how the lower edge 27 of the waste scraper 5 contacts the upper, waste receiving surface 26 of the collecting floor 3.

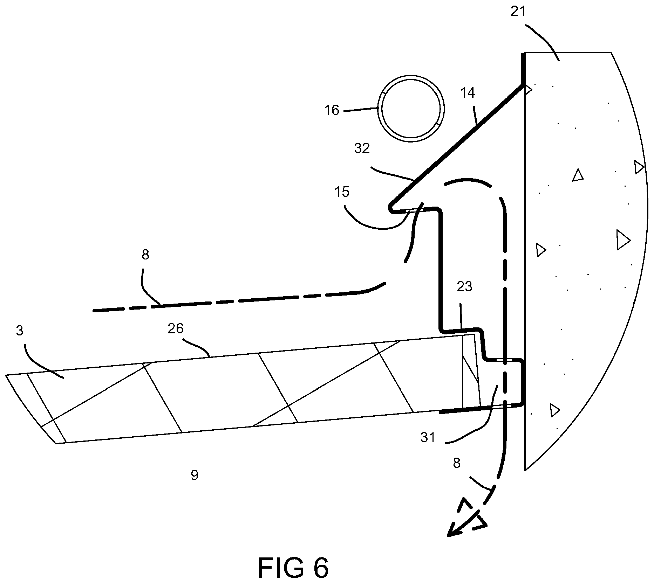

In figure 6, an embodiment is depicted where in fact an integration of the ventilation system and the waste removal system becomes clear. Figure 6 shows a cross sectional detail indicated in figure 3. A profile section 14 is shown in cross section. The profile section 14 is fixed to the side wall 21. Section profile 14 comprises a collecting floor coupling end 23. In this collecting floor coupling end 23, it holds the collecting floor in a liquid-tight manner in order to prevent waste and pests from getting below the collecting floor 3. Furthermore, it provides a lower opening for ventilation air 30. The collecting floor coupling end 23 here holds an edge of the collecting floor remote from the wall 21. Furthermore, through holes in the profile material allows air to pass. The profile is provided with a nose 32 (in cross section) with an opening at a distance from the collecting surface of the collecting floor 3. The nose 32 provides a surface facing the collecting surface 26. A path of air is indicated with reference number 8. In this way, air is drawn though the opening 15 as indicated.

Furthermore, the waste flush conduit 16 is positioned above the profile 14 and above the nose 31. In this way nozzles in the waste flush conduit 16 can spray the surface 26 of the collecting floor 3 and the water does not directly get into opening 15 and below the collecting floor 3. The slope of the surface 26 of the collecting floor 3 helps in this. In the depicted embodiment, the profile section 14 can be made by bending sheet material for instance on shears or press brakes. The depicted embodiment can easily be installed in existing stables, for renovation and updating the ventilation system and waste removal system in one go.

The stable further comprises a control system 40. Functionally coupled to the controller are one or more sensors for detecting a level of gases like ammonia (NH3), carbon dioxide (CO2), hydrogen sulphide (H2S), methane (CH4), hydrogen cyanide (HCN), ozone, and a combination thereof. Alternatively or in combination, a sensor can be provided to determine a level of desired gasses, like oxygen. The sensor con also be suited for detection of levels of particles and dust. In the drawing, schematically ne detector is indicated. In practise, usually a series of sensor is installed at different locations as well as at different heights. Usually, one or more sensors are installed between 0.5 and 2 meter, depending on the size of the animals.

Based on a level detected by the one or more sensors 41, the control system activates the ventilation system 7 and/or the waste removal system 6. The control system 40 can also depending on a sensed level modify an flow rate of the ventilation system 7 and/or of the waste removal system 6.

The control system is further functionally coupled to the waste scraper 5. The control system is further functionally coupled to the waste flush conduit. For instance depending on the position of the waste scraper 5, the control system 40 can activate past of the flush conduit of part or selected spray nozzles of the waste flush conduit 16.

In figure 7, an alternative embodiment of the waste removal system is depicted. In this embodiment, it may even integrate part of the ventilation system. In this embodiment, the waste scraper 5 includes a hood 28. Here, the hood extends over a width of the collecting floor 3. Lower rims of the hood 28 are close to the collecting floor surface. In an alternative embodiment, a small hood fitting in the discharge channel 4 can be provided.

The hood 28 is fluidly coupled to a flexible conduit 29, here a flexible hose 29. The flexible conduit 29 is here provided on an automatic line reel or winder or reeling drum 30. The waste scraper 5 with hood 28 in operation runs back and forth along a length of the collecting floor 3. The flexible conduit 29 is fluidly coupled with the waste suction device. In operation, air and waste are sucked from the collecting floor 3. In this embodiment, in fact the flexible conduit provides a waste drainage conduit between the walk-on floor 2 and the collecting floor 3.

The waste scraper 5 further comprises an actuator for displacing the waste scraper 5 back and forth along a length of the collecting floor 3. The waste scraper 5 can have one or two opposite waste displacement surfaces. The waste displacement surfaces depicted are planar. In an embodiment, in order to displace waste effectively to the discharge channel 4, the waste displacement surface can be angled, having its center at the discharge channel. Thus, the displacement surface has two displacement surface parts angled towards the discharge channel 4.

It will also be clear that the above description and drawings are included to illustrate some embodiments of the invention, and not to limit the scope of protection. Starting from this disclosure, many more embodiments will be evident to a skilled person. These embodiments are within the scope of protection and the essence of this invention and are obvious combinations of prior art techniques and the disclosure of this patent.

### Reference Numbers

1 stable
2 walk-on floor
3 collecting floor
4 discharge channel
5 waste scraper or dung slider
6 waste removal system
7 ventilation system
8 air flow
9 cellar
10 air conduit
11 waste drainage conduit
12 fluid coupling - for coupling the waste drainage conduit to the discharge channel
13 waste drainage frame
14 collecting floor support profile
15 inlet opening of the ventilation system
16 waste flush conduit
17 waste scraper lip
18 discharge channel outlet opening
19 waste container
20 cellar floor
21 cellar wall
22 discharge channel bottom
23 collecting floor holding part
26 collecting floor waste receiving surface
27 lower edge of waste scraper
28 hood
29 flexible conduit
30 flexible conduit reel
31 collecting floor edge clamp
32 nose
33 waste suction device
34 reduced pressure system
40 controller
41 sensor

## Claims

1. A stable comprising:
- a walk-on floor provided with passages for waste, comprising manure and urine;
- a collecting floor below the walk-on floor with a top surface for receiving said waste, and
- a waste removal system,
said waste removal system comprising a discharge channel, with the collecting floor connecting to the discharge channel, wherein said collecting floor and said discharge channel are liquid-closed and said waste removal system further comprises a waste drainage conduit in fluid coupling with said discharge channel, and wherein said waste drainage conduit comprises a waste transport device, in particular said waste transport system comprising a waste suction device for providing a reduced pressure in said waste drainage conduit.

2. The stable of claim 1, said waste removal system further comprising a waste scraper for displacing the waste from the collecting floor into the discharge channel, wherein in particular said waste scraper is furthermore provided for displacing the waste into and through the discharge channel and into the waste drainage conduit, in particular said waste scraper comprises a scraper lip adapted to a cross section of said discharge channel for displacing waste in said discharge channel.

3. The stable of claim 1 or 2, wherein said collecting floor is at a slope and comprising a series of floor parts, and said collecting floor connecting to the discharge channel with on either side of said discharge channel with said floor parts sloping down to said discharge channel at said slope.

4. The stable of any one of the preceding claims, said collecting floor comprises floor parts on either side of said discharge channel and connecting to said discharge channel.

5. The stable of any one of the preceding claims, wherein said waste drainage conduit is provided below said collecting floor.

6. The stable according to any one of the preceding claims 1-4, wherein said waste drainage conduit is provided between said walk-on floor and said collecting floor.

7. The stable of any one of the preceding claims, said waste removal system further comprising a flush device for flushing waste through said discharge channel and into said waste drainage conduit, in particular said flush device comprising a waste flush conduit extending along a length of the collecting floor, in particular comprising a series of spray nozzles directed towards the collecting floor and positioned along the waste flush conduit.

8. The stable of any one of the preceding claims, wherein said waste drainage conduit is parallel to said discharge channel, in particular parallel and below said discharge channel, more in particular comprising at least one passage fluid coupling said waste drainage conduit and said discharge channel.

9. The stable stable of any one of the preceding claims, further comprising a ventilation system, wherein said ventilation system comprises a reduced pressure system coupled to a series of inlet openings positioned between said walk-on floor and said collecting floor and along said collecting floor for in operation causing a flow of air over said collecting floor to said inlet openings.

10. The stable of claim 9, wherein said inlet openings are positioned above said collecting floor, in particular between 10 and 30 cm above said collecting floor.

11. The stable according to any one of the preceding claims when depending on claim 9, wherein said ventilation system comprises a ventilation conduit between said walk-on floor and said collecting floor and extending along a side of said collecting floor, said ventilation conduit comprising said inlet openings.

12. The stable according to any one of the preceding claims when depending on claim 9, said ventilation system further comprising a space below said collecting floor, said space fluidly coupled to said inlet openings, and said space fluidly coupled to said reduced pressure system for in operation reducing a pressure in said space.

13. The stable according to claim 9, further comprising a profile section comprising attachment ends for attaching said profile section to a wall and defining an attachment plane, said profile section comprising a collecting floor edge receiving part for receiving a collecting floor edge and holding said collecting floor fixed to said wall with its edge at a distance from said attachment plane, said profile section providing a first and second attachment end with said collecting floor edge receiving part between said first and second attachment end, said collecting floor edge receiving part providing a liquid-closed coupling, and said profile section comprising a series of said inlet openings providing air passages cross with respect to a longitudinal direction of said profile section and passing between said collecting floor edge and said attachment plane.

14. The stable according to any one of the preceding claims, further comprising a control system that is functionally coupled to at least one selected from said ventilation system and said waste removal system.

15. The stable according to any one of the preceding claims, further comprising a series of sensors at animal level, in particular at a height of between 0,5 and 3 meter, for sensing at a concentration level of least one selected from carbondioxide, methane, hydrogensulfide, hydrogencyanide (HCN), ozone and a combination thereof, said sensors functionally coupled with said control system, and said control system adapted for activating or changing operation of at least one selected from said ventilation system and said waste removal system depending on said sensed concentration level.
